# EUROPÄISCHE PATENTSCHRIFT

(11) **EP 2 245 283 B1**
(45) Veröffentlichungstag und Bekanntmachung des Hinweises auf die Patenterteilung: **21.09.2011**
(21) Anmeldenummer: 09702962.3
(22) Anmeldetag: 07.01.2009
(51) Int. Cl.: F02B 39/00, F02B 37/18, F16H 1/16

(54) **ELEKTRONISCHER STELLANTRIEB ZUR BETÄTIGUNG EINES VENTILS IN EINEM TURBOLADER FÜR EIN KRAFTFAHRZEUG**
ELECTRONIC ACTUATOR FOR ACTUATING A VALVE IN A TURBO CHARGER OF A MOTOR VEHICLE
SERVO-ACTIONNEUR ÉLECTRONIQUE POUR L'ACTIONNEMENT D'UNE SOUPAPE DANS UN TURBOCOMPRESSEUR POUR UN VÉHICULE AUTOMOBILE

(30) Priorität: 16.01.2008 DE 102008004688
(43) Veröffentlichungstag der Anmeldung: 03.11.2010
(73) Patentinhaber: Continental Automotive GmbH, 30165 Hannover (DE)
(72) Erfinder: ISSLEIB, Rainer, 60489 Frankfurt (DE); KREMINA, Vinzent, 60316 Frankfurt (DE)
(86) Internationale Anmeldenummer: PCT/EP2009/050122
(87) Internationale Veröffentlichungsnummer: WO 2009/090131

(56) Entgegenhaltungen:
- EP-A- 0 662 573
- EP-A- 1 349 259
- WO-A-95/13462
- WO-A-97/42697
- DE-A1- 3 630 088

## Beschreibung

Die Erfindung bezieht sich auf einen elektronischen Stellantrieb zur Betätigung eines Ventils in einem Turbolader für ein Kraftfahrzeug. Stellantriebe zur Betätigung von Ventilen in Turboladern für Kraftfahrzeuge sind bekannt. Die Anordnung der Ventile ist dabei notwendig, um die Luftmenge im Turbolader in Abhängigkeit von den Betriebsbedingungen zu regeln. Die Ventile stehen dabei in der Regel mit Bypassleitungen in Verbindung, über die gegebenenfalls überschüssige Luftmengen oder Abgasmengen abgeführt werden können. Zur Betätigung der Ventile bedient man sich in der Regel nach dem Stand der Technik so genannter pneumatischer Stellantriebe, die bei einem oberen Grenzwert des Druckes im Turbolader das jeweilige Ventil öffnen und so den Bypass zur Abfuhr der überschüssigen Luftmenge beziehungsweise Abgasmengen freigeben. Dabei werden Kräfte gegen Federsysteme aufgebracht und auf den Einsatz von Elektromotoren verzichtet. Fällt anschließend der Druck im Turbolader auf einen speziellen Grenzwert ab, wird das jeweilige Ventil durch Federkräfte geschlossen. Bei diesen pneumatischen Stellantrieben ist nachteilig, dass die Ventile geöffnet beziehungsweise geschlossen werden, ohne dass es möglich ist, Positionen des Ventils gezielt zwischen der vollständig geöffneten Position und der vollständig geschlossenen Position einzustellen. Um solche Zwischenpositionen des Ventils einstellen zu können, bedient man sich nach dem Stand der Technik ferner elektrisch bestromter Stellantriebe. Diese haben jedoch den Nachteil, dass die Elektromotoren, die den elektrischen Stellantrieb mit elektrischer Energie versorgen, in jeder Position des Ventils kontinuierlich mit elektrischem Strom beaufschlagt werden müssen, siehe beipielsweise EP 1 349 259 A. Dies hat zur Folge, dass der Elektromotor entsprechend hoher Leistungen ausgelegt werden muss. Dabei ist ferner nachteilig, dass ein entsprechend großer Bauraum für den relativ groß dimensionierten Elektromotor geschaffen werden muss.

Der Erfindung liegt die Aufgabe zugrunde, einen elektronischen Stellantrieb zur Betätigung eines Ventils in einem Turbolader für ein Kraftfahrzeug zu schaffen, mit dem sich Bauraum einsparen lässt und der Stromverbrauch möglichst niedrig gehalten werden kann.

Die der Erfindung zugrunde liegende Aufgabe wird durch einen elektronischen Stellantrieb mit einem zu betätigendem Ventil in einem Turbolader für ein Kraftfahrzeug gelöst, der mindestens eine selbsthemmende Schnecke eines Schneckengetriebes aufweist. Die Selbsthemmung der mindestens einen Schnecke wird ingenieurmäßig über die Steigung der Flanken der Schnecke entsprechend ausgelegt. Bei dem Schneckengetriebe handelt es sich in der Regel um die Kombination von einer Schnecke und einem Schneckenrad beziehungsweise einem Schneckenradsegment. Das Schneckenrad oder Schneckenradsegment steht dabei mit einer Ventilstange in Verbindung, die wiederum mit dem zu betätigenden Ventil direkt oder indirekt verbunden ist. Über die Ventilstange ist es somit möglich, dass sich alle gewünschten Positionen des Ventils zwischen der vollständig geöffneten Position und der vollständig geschlossenen Position des Ventils auf relativ einfache Weise einstellen lassen. Es hat sich in überraschender Weise gezeigt, dass durch die Anordnung mindestens einer selbsthemmenden Schnecke im elektronischen Stellantrieb eine kontinuierliche Bestromung des Elektromotors während der Aufrechterhaltung einer speziellen Position des Ventils vermieden werden kann, was zu einer Reduzierung des Stromverbrauchs führt. Aufgrund dieser Tatsache ist es möglich, den Elektromotor in vorteilhafter Weise kleiner auszulegen. Dies wiederum wirkt sich direkt in vorteilhafter Weise auf eine Verkleinerung des Bauraumes aus. Der elektronische Stellantrieb arbeitet ökonomisch besonders vorteilhaft, was zu einer Verbesserung des Gesamtwirkungsgrades des elektronischen Stellantriebs und damit zu einer vorteilhaften Reduktion von CO₂ im Betrieb des Kraftfahrzeuges führt.

Eine bevorzugte Ausgestaltung der Erfindung besteht darin, dass die mindestens eine selbsthemmende Schnecke mit dem als Ventil angeordneten Ventil in der Abgasleitung des Turboladers indirekt in Verbindung steht. Die Verbindung kann dabei direkt oder indirekt über weitere Zwischenteile erfolgen. Die Verbindung des elektronischen Stellantriebs mit einem Ventil in der Abgasleitung des Turboladers erleichtert in besonders vorteilhafter Weise die Regelung der Luftmenge im Turbolader, da es aufgrund der Betriebsbedingungen in der Abgasleitung des Turboladers besonders vorteilhaft ist, die Regelung der Luftmenge über die Anordnung eines Bypasses und die Abgasturbine vorzunehmen. Nachteile der Einflüsse im Brennraum des Motors werden so in vorteilhafter Weise minimiert.

Nach einer weiteren bevorzugten Ausgestaltung der Erfindung ist der Elektromotor im elektronischen Stellantrieb angeordnet und der Elektromotor und mindestens eine selbsthemmende Schnecke weisen dieselbe Längsachse auf. Dadurch wird der elektronische Stellantrieb besonders kompakt ausgeführt, was seine Fertigung erleichtert und zu einer weiteren Einsparung von erforderlichem Bauraum führt.

Gemäß einer weiteren bevorzugten Ausgestaltung der Erfindung ist der Signalgeber für den Elektromotor innerhalb des Gehäuses des elektronischen Stellantriebs angeordnet. Der Signalgeber dient dabei der Steuerung beziehungsweise Regelung des Elektromotors. Seine Anordnung innerhalb des Gehäuses des elektronischen Stellantriebs erleichtert zusätzlich in vorteilhafter Weise die kompakte Ausgestaltung des elektronischen Stellantriebs, so dass sich der erforderliche Bauraum für den elektronischen Stellantrieb minimieren lässt.

Die Erfindung wird nachfolgend anhand der Zeichnung (Fig. 1 bis Fig. 3) näher und beispielhaft erläutert.
- Fig. 1: zeigt einen Turbolader im Schnitt mit der Anordnung des Ventils in der Abgasleitung.
- Fig. 2: zeigt den elektronischen Stellantrieb bei geöffnetem Gehäuse.
- Fig. 3: zeigt den elektronischen Stellantrieb im montierten Zustand am Turbolader.

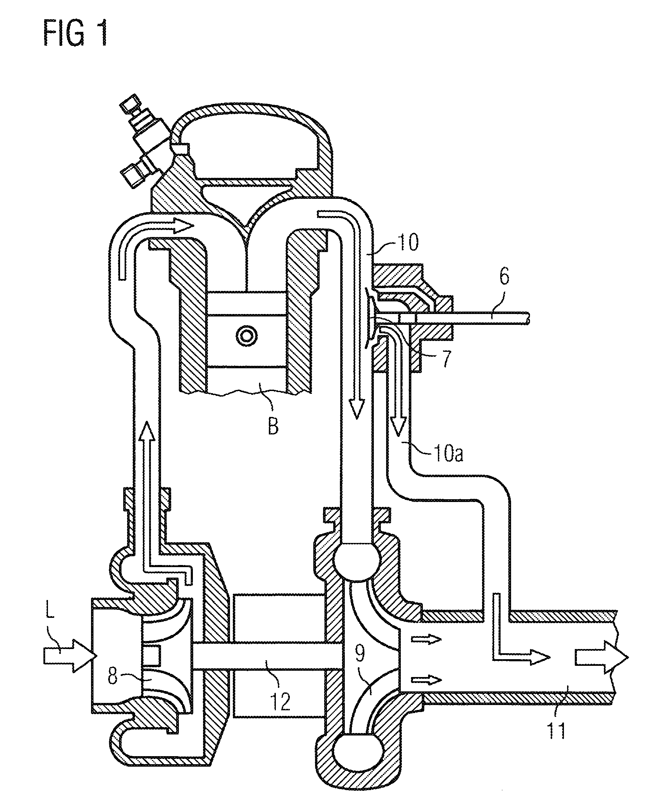

In Fig. 1 ist der Turbolader für ein Kraftfahrzeug im Schnitt mit der Anordnung des Ventils 7, das über den elektronischen Stellantrieb (nicht dargestellt) getätigt wird, schematisch vereinfacht dargestellt. Dem Verdichter 8 wird eine Luftmenge L zugeführt, die anschließend in den Brennraum B des Motors gelangt. Die Abgase werden über die Abgasleitung 10 aus dem Brennraum des Motors abgeführt und in der Regel über die Abgasturbine 9 des Turboladers dem Auspuff 11 zugeführt. Der Verdichter 8 und die Abgasturbine 9 stehen dabei über eine drehbar gelagerte Antriebswelle 12 in Verbindung. Steigt der Druck innerhalb des Turboladers zu stark an, ist es erforderlich, das Ventil 7, das in der Abgasleitung 10 angeordnet ist, über eine Ventilstange 6 zu betätigen. Die Art der Betätigung ist hier sehr stark vereinfacht dargestellt. Über die Ventilstange 6 wird das Ventil 7 in Abhängigkeit von der Höhe des überschüssigen Druckes im Turbolader teilweise bis vollständig geöffnet, so dass eine speziell vorbestimmte Menge an Abgas über die Bypassleitung 10a direkt in den Auspuff 11 gelangen kann. Wird dabei die Position des Ventils 7 eine gewisse Zeit lang beibehalten, ist es nicht erforderlich, den elektronischen Stellantrieb kontinuierlich mit elektrischem Strom zu versorgen, so dass der Verbrauch an elektrischem Strom relativ gering gehalten werden kann. Dies ermöglicht die vorteilhafte Anordnung mindestens einer selbsthemmenden Schnecke eines Schneckengetriebes (nicht dargestellt) im elektronischen Stellantrieb. Auf diese Weise ist eine kontinuierliche Regelung der Luftmenge innerhalb des Turboladers bei gleichzeitiger Erhöhung des Gesamtwirkungsgrades, die direkt zu einer Reduktion an CO₂ führt auf einfache Weise möglich.

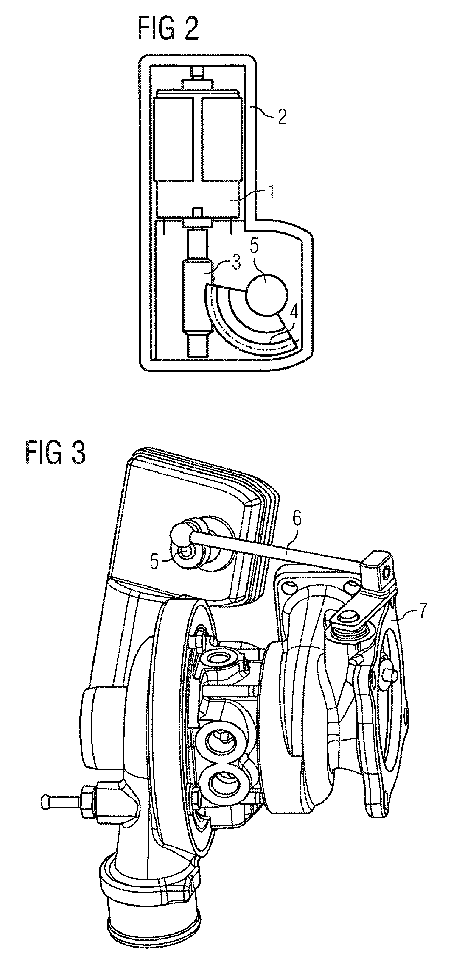

In Fig. 2 ist der elektronische Stellantrieb zur Betätigung eines Ventils (nicht dargestellt) in einem Turbolader für ein Kraftfahrzeug mit geöffnetem Gehäuse dargestellt. Der elektronische Stellantrieb weist eine selbsthemmende Schnecke 3 eines Schneckengetriebes auf. Das Schneckengetriebe besteht aus der selbsthemmenden Schnecke 3 und dem Schneckenradsegment 4. Das Schneckenradsegment 4 ist mit einer Antriebswelle 5 fest verbunden. Im elektronischen Stellantrieb ist ein Elektromotor 1 angeordnet, wobei der Elektromotor 1 und die selbsthemmende Schnecke 3 dieselbe Längsachse aufweisen. Auf diese Weise baut der elektronische Stellantrieb besonders kompakt. Besonders vorteilhaft ist es, wenn der Signalgeber (nicht dargestellt) für den Elektromotor 1 ebenfalls innerhalb des Gehäuses 2 des elektronischen Stellantriebs angeordnet ist.

In Fig. 3 ist der elektronische Stellantrieb zur Betätigung eines Ventils 7 in fertig montiertem Zustand dreidimensional dargestellt. Die Antriebswelle 5 betätigt über die Ventilstange 6 das Ventil 7 durch Beaufschlagung einer entsprechenden Drehbewegung solange, bis die gewünschte Position des Ventils eingestellt ist. Zur Aufrechterhaltung dieser Ventilposition ist es dann nicht mehr erforderlich, den Elektromotor (nicht dargestellt) weiterhin kontinuierlich mit Strom zu beaufschlagen. Dies wirkt sich direkt vorteilhaft auf den Gesamtwirkungsgrad aus und dient dabei gleichzeitig der Reduzierung der CO₂-Menge während des Betriebes des Kraftfahrzeuges.

## Patentansprüche

1. Elektronischer Stellantrieb mit einem zu betätigendem Ventil (7) in einem Turbolader für ein Kraftfahrzeug, der mindestens eine selbsthemmende Schnecke (3) eines Schneckengetriebes aufweist.

2. Elektronischer Stellantrieb nach Anspruch 1, bei dem die mindestens eine selbsthemmende Schnecke (3) mit dem als Ventil (7) angeordneten Ventil in der Abgasleitung (10) des Turboladers indirekt in Verbindung steht.

3. Elektronischer Stellantrieb nach Anspruch 1 oder Anspruch 2, bei dem der Elektromotor (1) im elektronischen Stellantrieb angeordnet ist und der Elektromotor (1) und mindestens eine selbsthemmende Schnecke (3) dieselbe Längsachse aufweisen.

4. Elektronischer Stellantrieb nach einem der Ansprüche 1 bis 3, bei dem der Signalgeber für den Elektromotor (1) innerhalb des Gehäuses (2) des elektronischen Stellantriebs angeordnet ist.

## Claims

1. Electronic actuating drive, having a valve (7) to be actuated, in a turbocharger for a motor vehicle, which electronic actuating drive has at least one self-locking worm gear (3) of a worm gear mechanism.

2. Electronic actuating drive according to Claim 1, in which the at least one self-locking worm gear (3) is indirectly connected to the valve, which is arranged as valve (7), in the exhaust line (10) of the turbocharger.

3. Electronic actuating drive according to Claim 1 or Claim 2, in which the electric motor (1) is arranged in the electronic actuating drive and the electric motor (1) and at least one self-locking worm gear (3) have the same longitudinal axis.

4. Electronic actuating drive according to one of Claims 1 to 3, in which the signal transmitter for the electric motor (1) is arranged within the housing (2) of the electronic actuating drive.

## Revendications

1. Actionneur électronique comprenant une vanne (7) à actionner dans un turbocompresseur de véhicule automobile qui comportent au moins une vis (3) sans fin autoblocante d'une transmission à vis sans fin.

2. Actionneur électronique suivant la revendication 1, dans lequel la au moins une vis (3) sans fin autoblocante est en relation indirecte avec la vanne, montée en tant que vanne (7), dans le conduit (10) des gaz d'échappement du turbocompresseur.

3. Actionneur électronique suivant la revendication 1 ou la revendication 2, dans lequel le moteur (1) électrique est disposé dans l'actionneur électronique et le moteur (1) électrique et au moins une (3) sans fin autoblocante ont le même axe longitudinal.

4. Actionneur électronique suivant l'une des revendications 1 à 3, dans lequel le générateur de signaux pour le moteur (1) électrique est disposé à l'intérieur du boîtier (2) de l'actionneur.
